# EUROPÄISCHE PATENTSCHRIFT

(11) **EP 1 453 693 B1**
(45) Veröffentlichungstag und Bekanntmachung des Hinweises auf die Patenterteilung: **26.10.2005**
(21) Anmeldenummer: 03780018.2
(22) Anmeldetag: 21.11.2003
(51) Int. Cl.: B60J 7/12

(54) **GESTÄNGEVERBINDUNG FÜR VERDECKGESTÄNGE VON KRAFTFAHRZEUGVERDECKEN**
HOOD CONNECTION FOR THE HOOD STAYS ON MOTOR VEHICLE HOODS
ASSEMBLAGE DE TIGES POUR CAPOTES DE VEHICULES AUTOMOBILES

(30) Priorität: 17.12.2002 DE 10259234
(43) Veröffentlichungstag der Anmeldung: 08.09.2004
(73) Patentinhaber: CTS Fahrzeug-Dachsysteme GmbH, 74321 Bietigheim-Bissingen (DE)
(72) Erfinder: ROSCHAT, Bernd, 25704 Nordermeldorf (DE); WAHL, Lorenz, 22337 Hamburg (DE)
(74) Vertreter: Wittner, Walter
(86) Internationale Anmeldenummer: PCT/EP2003/013053
(87) Internationale Veröffentlichungsnummer: WO 2004/054832

(56) Entgegenhaltungen:
- DE-A- 10 023 047
- US-A- 780 141
- US-A- 1 654 132

## Beschreibung

Die Erfindung betrifft eine Gestängeverbindung für Verdeckgestänge von Kraftfahrzeugen gemäß dem Oberbegriff des Anspruches 1.

Gestängeverbindungen für Verdeckgestänge sind in vielfältiger Ausgestaltung bekannt, so unter anderem durch die DE 90 04 986 U1 für im Oberbegriff des Anspruches 1 berücksichtigte Verdeckgestänge von Nutzfahrzeugen. Bei diesen Verdeckgestängen sind längs des Laderaumes verlaufende Traggestänge als Teile von Dachrahmen vorgesehen, und es sind gegen die durch Balken gebildeten Traggestänge die Fußteile von in Fahrzeuglängsrichtung sich erstreckenden und seitlich versetzt verlaufenden Lagerdornen als Teile von Stützlagern verschraubt. Über diese Stützlager sind die Traggestänge mit quer verlaufenden Verdeckspriegeln bedarfsweise zu verbinden, wenn der Laderaum des jeweiligen Fahrzeuges mit einer Plane abgedeckt werden soll, die im Überdeckungsbereich zum Laderaum von den Verdeckspriegeln abgestützt wird. Die Lagerdorne laufen bei Erstreckung in Fahrzeuglängsrichtung in einer Einfädelspitze aus und weisen im Übergang auf die Einfädelspitze eine Auflagefläche für den Spriegel endseitig als Teile der Stützlager zugehörige Buchsen auf. Die Auflagefläche ist gegenüber dem anschließenden Bereich der Einfädelspitze in ihrem Abstand zur Achse des Lagerdorns zurückgenommen, so dass bei in die Einstecköffnungen der Buchsen eingreifenden und mit den Traggestängen montagegerecht verbundenen Spriegeln diese über die Buchsen in Längsrichtung der Lagerdorne dadurch festgelegt sind, dass die Buchsen zwischen fußseitigen Verbreiterungen der Lagerdorne und der Übergangsstufe in die Einfädelspitze zu liegen kommen.

Im Hinblick darauf, dass der Abstand des Verdecks zur Ladefläche bei Nutzfahrzeugen üblicherweise größer als die Greifhöhe einer Bedienperson ist und Verdecke zusammen mit den Verdeckspriegeln in Abhängigkeit vom jeweiligen Ladegut zur Vergrößerung der Ladehöhe und/oder zur Erleichterung des Beladens des Öfteren entfernt werden müssen, ist das verwendete Stützlager darauf ausgelegt, die Verdeckspriegel unter Zuhilfenahme von Stützstangen auf die Lagerdorne aufzufädeln und auch von diesen wieder zu lösen, wozu die Lagerdorne gegen ihre Einfädelspitze gegenüberliegend zur Auflagefläche sich schräg auf die Einfädelspitze zulaufend verjüngen. Die Verjüngung liegt im Übergang auf die Einfädelspitze in der Größenordnung der Höhe des stufenförmigen Absatzes zwischen Auflagefläche und Einfädelspitze. Damit liegt eine auf die speziellen Bedürfnisse derartiger Gestängeverbindungen bei Nutzfahrzeugen abgestimmte Lösung vor, die für dauerhafte Verbindungen zwischen Traggestängen und Verdeckspriegeln nicht geeignet ist.

Andererseits bietet eine derartige Ausgestaltung von Gestängeverbindungen für Verdeckgestänge von Nutzfahrzeugen Vorteile gegenüber Lösungen gemäß der DE 81 06 535 U1, bei der die Längsbereiche zwischen auf seitlichen Traggestängen abgestützten Verdeckspriegeln durch zusätzliche, parallel zu den Traggestängen verlaufende Längsbäume überdeckt sind, die an die Verdeckspriegel dadurch anzuschließen sind, dass die Spriegel in ihrer Längsrichtung verlaufende schlitzförmige Aufnahmen aufweisen, in die die Längsbäume mit abgewinkelten, querschnittsangepassten hakenförmigen Laschen eingreifen. Hierdurch ergibt sich ein verhältnismäßig schwieriger Einfädelvorgang.

Zur Ausbildung der den Verdeckspriegeln zugeordneten Teile der Stützlager mit einer Aufnahmeöffnung für ein Verbindungsgelenk zum jeweiligen Teil des Traggestänges ist es aus der DE 100 23 047 C2 bekannt, den Spriegel als Hohlprofil zu gestalten, in den endseitig jeweils ein den Stützlagern zugehöriges die Aufnahmeöffnung enthaltendes Teil unverlierbar eingesetzt ist.

Gestängeverbindungen für Verdeckgestänge sind aus der DE 199 16 692 A1 auch für Personenkraftwagen mit Faltverdecken bekannt, wobei auch hier Verdeckspriegel über Stützlager mit den längsseitig des Fahrzeuges verlaufenden Traggestängen verbunden sind, die als Verdeck-Faltgestänge mit entsprechenden Gestängelenkern ausgebildet sind. Die Anbindung der Verdeckspriegel gegen die als Faltgestänge ausgebildeten Traggestänge gestaltet sich hierbei problematisch, da die Faltgestänge meist vielgliedrig und dadurch schon sehr komplex sind, sowohl im Hinblick auf den Bewegungsablauf zwischen Öffnen und Schließen des Verdeckes sowie auch hinsichtlich einer möglichst raumsparenden konstruktiven Gestaltung extremen Anforderungen genügen müssen, was entsprechende Rückwirkungen auf die Gestaltung der Anbindung der Verdeckspriegel an die Faltgestänge zur Folge hat, und dies überlagert von Forderungen nach einer möglichst einfachen und montagegünstigen Bauform bei bester Funktionalität auch im Hinblick auf die sehr hohen Anforderungen bei Personenkraftwagen.

Der Erfindung liegt die Aufgabe zugrunde, eine Gestängeverbindung der eingangs genannten Art im Sinne eines weiteren und weitergehenden Anforderungen unterworfenen Anwendungsbereiches weiterzubilden.

Gemäß der Erfindung wird dies mit den Merkmalen des Anspruches 1 erreicht, demzufolge für Verdeck-Faltgestänge von Personenkraftwagen deren Gestängelenker selbst Bestandteile der Stützlager bilden und zwar durch Ausbildung jeweils eines Lagerdornes an einem Gestängelenker, wobei dem Lagerdorn spriegelseitig eine Einstecköffnung zugeordnet ist, die vom Lagerdorn durchsetzt ist und gegen die der Lagerdorn durch Verrastung gesichert ist. Ein solches Stützlager lässt sich bei minimiertem Aufwand schaffen und ist hinsichtlich des Raumbedarfs wie auch der Montage, und Letzteres auch im Servicebereich, besonders vorteilhaft. Dies auch dadurch, dass der Einsatzkörper dübelartig gestaltet ist und in die spriegelseitige Einstecköffnung bei wechselseitiger Verrastung gegen den Spriegel einerseits und den Lagerdorn andererseits eingesetzt ist, was die Montage weiter erleichtert und gleichzeitig auch bedarfsweise eine schnelle Demontage ermöglicht. Zudem lassen sich über den Einsatzkörper auch Toleranzen zwischen den zu montierenden Teilen ausgleichen und entsprechend der jeweiligen Werkstoffpaarung auch gute Laufeigenschaften bei klapperfreiem Sitz gewährleisten. Ferner kann bei einer derartigen Ausgestaltung auch Korrosionsgesichtspunkten in vorteilhafter Weise Rechnung getragen werden.

Insbesondere gilt dies, wenn der Einsatzkörper als hülsenförmiger Kunststoffklipp ausgebildet ist.

Eine einstückige Ausformung des jeweiligen Lagerdorns aus dem zugehörigen Gestängelenker ist insbesondere bei Gestaltung des Gestängelenkers als Flachprofil zweckmäßig, wobei der Lagerdorn bei einer solchen Lösung aus dem Flachprofil ausgestellt oder ausgeschnitten werden kann und sich auch eine randseitig zum Lenker auskragende Ausbildung des Lagerdorns herstellungstechnisch besonders vorteilhaft realisieren lässt. Zudem lassen sich durch eine solche Gestaltung auch räumliche Vorteile erzielen, sei es bei Erstreckung des Lagerdorns in der Schwenkebene des Lenkers oder bei einer seitlich hierzu versetzten Erstreckungsebene des Lagerdorns, beispielsweise durch eine konsolartige Verbindung zwischen Lagerdorn und Gestängelenker. Eine solche konsolartige Abstützung kann beispielsweise auch durch einen abgekröpften Bereich des Gestängelenkers gebildet sein.

Bei diesen Ausgestaltungsmöglichkeiten, die auch Varianten einschließen, bei denen der Lagerdorn von der Schwenkebene des Gestängelenkers abweichende Erstreckungen aufweist und beispielsweise seitlich zum Lenker ausgestellt ist und/oder auskragt, sind bei minimiertem Aufwand die Voraussetzungen für eine vereinfachte Anbindung zum jeweiligen Verdeckspriegel geschaffen.

Die dübelartige Gestaltung des Einsatzkörpers erweist sich insbesondere für die Anbindung an ein Hohlprofil aufweisende Verdeckspriegel als zweckmäßig, da so die Einstecköffnung in einfachster Weise durch eine durchgehende Bohrung gebildet werden kann, gegenüber der sich auch die angestrebten Verrastungen in besonders einfacher Weise realisieren lassen. Es lässt sich so der Einsatzkörper in einfacher Weise über einen endseitigen Bund und einem diesen zugeordnete Verrastung gegenüber dem Spriegel fixieren. Wenn darüber hinaus das gegenüberliegende Ende des dübelartigen Einsatzkörpers über das Spriegelprofil vorsteht, und zwar insbesondere im Bereich von die Verrastungen bildenden Rasthaken, die durch den einzuführenden Lagerdorn aufgespreizt und anschließend vom Kopf des Lagerdorns hintergriffen werden, und zwar unter Verspannung oder zumindest axialer Sicherung des Einsatzkörpers zum Lagerdorn.

Weitere Einzelheiten und Merkmale der Erfindung ergeben sich aus den Ansprüchen. Ferner wird die Erfindung ergänzend nachfolgend anhand von Ausführungsbeispielen erläutert. Es zeigen:
- Fig. 1: einen Längsbereich eines längsseitigen Verdeck-Faltgestänges mit aneinander anschließenden, gegeneinander verschwenkbaren Gestängelenkern, von denen einer mit einem Lagerdorn versehen ist, der als Bestandteil eines Stützlagers in der Anbindung eines Verdeckspriegels zu einem längsseitigen Verdeck-Faltgestänge liegt,
- Fig. 2: eine Variante der Anordnung des Lagerdornes zu einem Gestängelenker des Verdeck-Faltgestänges in einem Ausschnitt,
- Fig. 3: einen dübelartiger Einsatzkörper für ein Stützlager gemäß der Erfindung,
- Fig. 4 und 5: vereinfachte Schnittdarstellungen des dübelartigen Einsatzkörpers gemäß Fig. 3 bei Schnittführungen entsprechend den Schnittebenen V und VI und strichpunktierter Andeutung des Verdeckspriegels,
- Fig. 6: eine im Wesentlichen der Fig. 1 entsprechende Darstellung, bei der die Anbindung eines Verdeckspriegels über ein Stützlager an einem Gestängelenker des Verdeck-Faltgestänges gezeigt ist, sowie
- Fig. 7: im Schema, stark abstrahiert, den Dachbereich eines Personenkraftwagens in Cabriolet-Ausführung mit einem Faltverdeck, dessen Verdeckgestänge seitliche, in Fahrzeuglängsrichtung verlaufende Faltgestänge aufweist, die über quer verlaufende Verdeckspriegel verbunden sind.

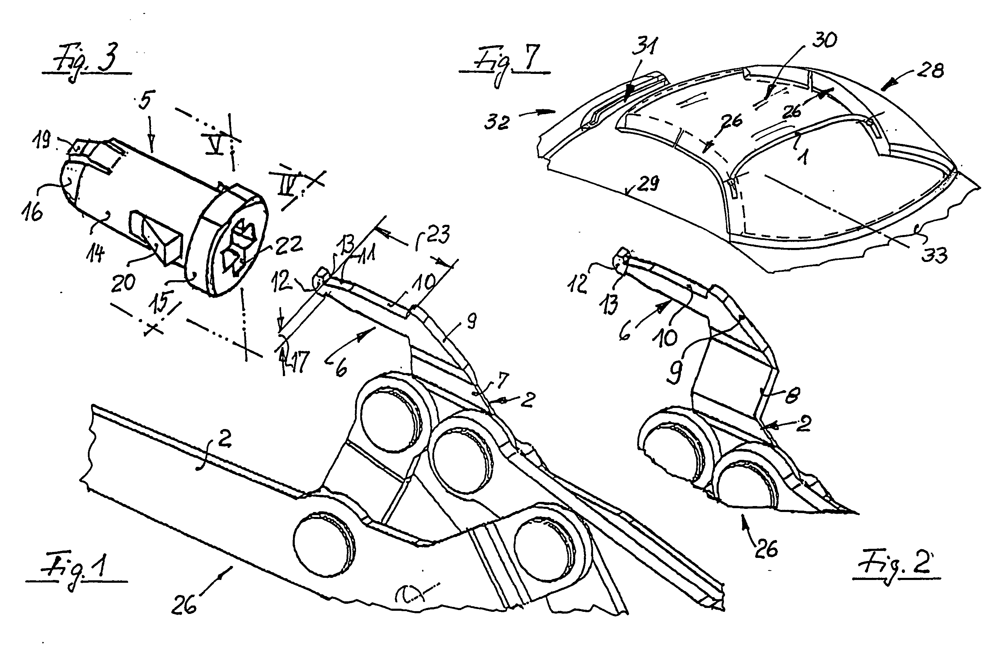

Fig. 7 veranschaulicht den Dachbereich 28 eines Personenkraftwagens, dessen Gürtellinie bei 29 angedeutet ist und der in der gezeigten Ausgestaltung des Personenkraftwagens als Cabriolet-Fahrzeug ein Faltverdeck 30 aufweist, das in der angedeuteten, geschlossenen, den Fahrzeuginnenraum überdeckenden Lage frontseitig an den Windlauf 31 einer Windschutzscheibe 32 anschließt und heckseitig in Höhe der Gürtellinie 29 im Bereich einer Heckabdeckung 33 des Fahrzeugsaufbaus an diesen angrenzt. Das Faltverdeck 30 weist, wie angedeutet, längsseitig verlaufende Verdeck-Faltgestänge 26 auf, die, wie in Fig. 1 veranschaulicht, durch gegeneinander verschwenkbare Gestängelenker 2 gebildet sind, welche in Fahrzeugquerrichtung, wie aus Fig. 6 und 7 ersichtlich, über Verdeckspriegel 1 verbunden sind. Fig. 7 zeigt eine solche Verbindung lediglich über einen Verdeckspriegel 1, üblicherweise sind über die Länge des Dachbereiches aber mehrere solcher Verdeckspriegel 1 vorgesehen.

In Fig. 1 ist ein Längsbereich eines solchen Verdeck-Faltgestänges 26 gezeigt, dem auf der anderen Fahrzeugseite ein, entsprechend dem zur Längsmittelebene insgesamt symmetrischen Aufbau des Faltverdeckes 30, entsprechend ausgestalteter Bereich entspricht und in dem mehrere Gestängelenker des Verdeck-Faltgestänges 26 zusammenlaufen und im Hinblick auf die angestrebte Verschwenkbarkeit des Verdeckes 30 zwischen einer Öffnungs- und einer Schließlage kinematisch miteinander verbunden sind.

Fig. 6 zeigt eine im Ausschnitt reduzierte, der Fig. 1 entsprechende Darstellung, in der die Verbindung zweier den Längsseiten des Verdeckes zugeordneter Verdeck-Faltgestänge 26 über einen in Fahrzeug-Querrichtung verlaufenden Verdeckspriegel 1 gezeigt ist, der, bezogen auf den gezeigten Ausschnitt, mit einem Gestängelenker 2 des Verdeck-Faltgestänges über eine Gestängeverbindung verbunden ist, die ein Stützlager 3 umfasst, welches seitens des Verdeckspriegels 1 eine lediglich strichliert dargestellte Einstecköffnung 4 aufweist, die einen dübelartigen Einsatzkörper 5 aufnimmt, der in der in Fig. 6 gezeigten montierten Lage von einem Lagerdorn 6 durchsetzt ist, welcher am Gestängelenker 2 vorgesehen ist.

Fig. 1 zeigt bezüglich des Lagerdorns 6 eine Lage und Ausbildung, bei der der Lagerdorn 6, bezogen auf die dem Ausschnitt gemäß Fig. 1 zugrunde gelegte geschlossene Lage des Verdecks, sich in Fahrzeuglängsrichtung nach vorne erstreckt und zwar im Wesentlichen in der Schwenkebene des den Lagerdorn 6 tragenden Gestelllenkers 2 und in Anbindung des Lagerdorns 6 an den Gestelllenker 2 über eine Konsole 7, die sich als wandseitiger Ansatz zum Gestelllenker 2 darstellt.

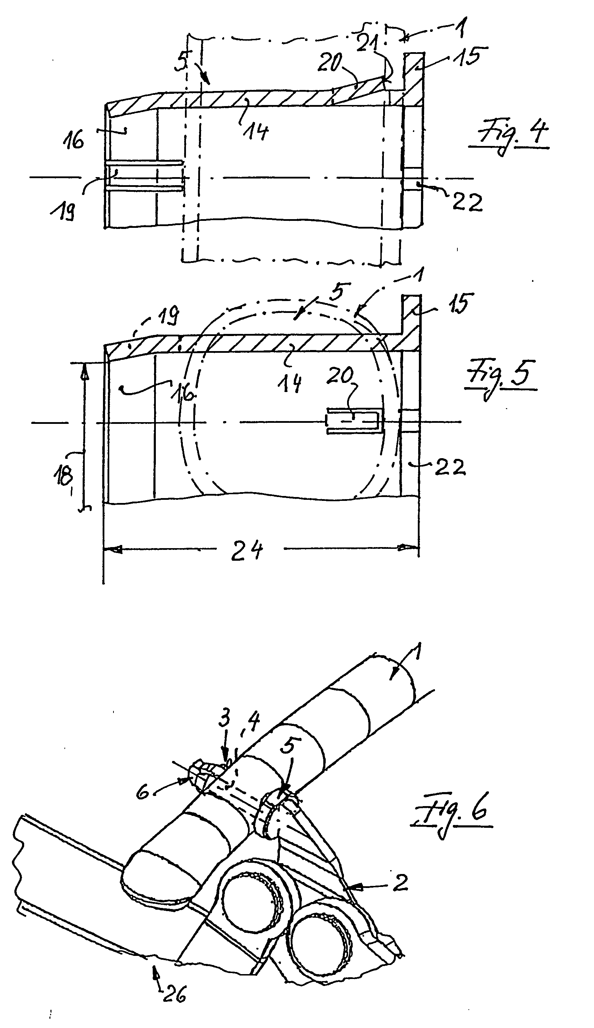

Fig. 2 zeigt eine Abwandlung zur vorbeschriebenen Ausgestaltung, bei der die nunmehr mit 8 bezeichnete Konsole zur Ebene des Gestängelenkers 2 seitlich schräg nach oben versetzt verläuft, zur Veranschaulichung von Lösungen, bei der für den Lagerdorn 6 eine von der Darstellung gemäß Fig. 1 abweichende Lage im Hinblick auf das Gesamtkonzept erforderlich ist. Je nach Ausgestaltung der Konsole 7 bzw. 8 als Übergangsstücke können somit für den Lagerdorn 6 unterschiedlichste Lagen verwirklicht werden, im Extremen auch Lagen, in denen der Lagerdorn 6 in Hochrichtung verläuft, oder auch in Querrichtung.

Im gezeigten Ausführungsbeispiel besteht der Gestängelenker 2 aus Flachmaterial, und ist insbesondere ein Blechlenker, zu dem die Konsole 7 bzw. 8 einen randseitigen Ansatz bildet, der in Fig. 1 flächig durchlaufend, in Fig. 2 abgewinkelt, in eine Tragschulter 9 des Lagerdornes 6 übergeht, an die ein in der Höhe abgesetzter über seine Länge querschnittsgleicher Führungsteil 10 anschließt, an den in Hochrichtung auf einander zulaufende Abschnitte 11 anschließen, die in ein Kopfteil 12 auslaufen, das in Hochrichtung verbreitert ist, so dass sich stufenförmige Absätze 13 ergeben. Die Höhe des Kopfteiles 12 entspricht bevorzugt der Höhe des Führungsteiles 10. Auf den Lagerdorn 6 ist der dübelartige Einsteckkörper 5 aufsteckbar, der im Ausführungsbeispiel bei kreisförmigen Querschnitt als Hülse 14 gestaltet ist, die an ihrem einen Ende einen Anschlagbund 15 und die an ihrem anderen, zum Anschlagbund 15 gegenüberliegenden Ende einen sich konisch verengenden Endabschnitt 16 aufweist, dessen endseitiger Durchmesser, bezogen auf den Lagerdorn 6, etwa dem in Hochrichtung gemessenen Abstand der Abschnitte 11 im Übergang auf das Kopfteil 12 entspricht. Die entsprechenden Abstände sind in Fig. 1 für den Lagerdorn 6 mit 17 und in Fig. 5 für die Hülse 14 mit 18 angedeutet.

In ihrem auf den Endabschnitt 16 auslaufenden Bereich ist die Hülse 14 mit einander gegenüberliegenden zungenförmigen Rasthaken 19 versehen, die sich bevorzugt bis in den an den Endabschnitt 16 anschließenden, gegen den Anschlagbund 15 verlaufenden Bereich erstrecken und die durch frei geschnittene Zungen gebildet sind.

Des Weiteren ist die Hülse 14 des Einsatzkörpers 5 benachbart zum Anschlagbund 15 mit Rasthaken 20 versehen, deren Anschlagflächen 21 gegen den Anschlagbund 15 gerichtet sind und die durch gegenüber der Hülse 14 frei geschnittene, über den Hülsenumfang vorspringende Rastzungen gebildet sind. Der Abstand der Anschlagflächen 21 der Rasthaken 20 zum Anschlagbund 15 entspricht etwa der Wandstärke des den Verdeckspriegel 1 bildenden Hohlprofils, das in den Fig. 4 und 5 strichpunktiert in seinem die Hülse 14 überspannenden Bereich angedeutet ist.

Im Bereich des Anschlagbundes 15 weist der Einsatzkörper 5 für den Lagerdorn 6 eine in der Lage auf die endseitigen Rasthaken 19 abgestimmte Einfädelöffnung 22 auf, so dass der Lagerdorn 6 bezüglich seines Kopfteiles 13 bei auf den Lagerdorn 6 aufgefädeltem Einsatzkörper 5 die Rasthaken 19 hintergreift, die sich gegen die Absätze 13 als Anschläge abstützen. Entsprechend dieser Funktion weist der Lagerdorn 6 zwischen seinen Anschlagflächen gegen die Tragschulter 9 und den Absätzen 13 im Übergang auf das Kopfteil 12 eine Länge 23 auf, die der Länge 24 der Hülse entspricht.

Bei auf den Lagerdorn 6 aufgefädeltem und axial gegenüber diesem verrasteten Einsatzkörper 5 und in eine entsprechende Einstecköffnung 4 des Verdeckspriegels 1 eingefädeltem und gegenüber dem Verdeckspriegel 1 verrastetem Einsatzkörper 5 ist mit der erfindungsgemäßen Lösung ein Stützlager in der Verbindung zwischen Verdeckspriegel 1 und Gestängelenker 2 des Verdeck-Faltgestänges geschaffen, das sich große Einfachheit und hohe Zuverlässigkeit auszeichnet, wobei die Verwendung des Einsatzkörpers 5 - bei entsprechender Materialwahl, bevorzugt Kunststoff - auch die Möglichkeit bietet, ungeachtet etwaiger Toleranzen Klappergeräusche zu vermeiden sowie auf Toleranzen auszugleichen. Insbesondere bietet die Erfindung mit einfachen Mitteln auch Möglichkeiten, wie anhand der Figuren 1 und 2 veranschaulicht, die in Fahrzeugquerrichtung gemessene Stützbreite zwischen korrespondierenden Stützlagern mit einfachen Mitteln anzupassen bzw. auf konstruktive Erfordernisse ohne Zusatzteile abzustimmen.

Insgesamt ist somit durch die Erfindung eine Gestängeverbindung für Verdeckgestänge von Faltverdecken 30 von Personenkraftwagen geschaffen, bei denen die den Längsseiten des Verdeckes 30 zugeordneten Verdeckfaltgestänge 26 Gestängelenker 2 und gegen diese über Stützlager 3 festgelegte, in Fahrzeugquerrichtung sich erstreckende Verdeckspriegel 1 aufweisen, die, jeweils als Teil der Stützlager 3, eine Einstecköffnung 4 für einen Einsatzkörper 5 aufweisen, der die Einstecköffnung 4 durchsetzt und seinerseits einen an einem Gestängelenker 2 ausgebildeten Lagerdorn 6 aufnimmt und von diesem durchsetzt ist. Der Einsteckkörper 5 weist einen die Einstecktiefe in die Einstecköffnung 4 begrenzenden Anschlagbund 15 auf und ist in Richtung auf den Anschlagbund gegen den Lagerdorn 6 und gegen den Verdeckspriegel 1 über axial zueinander beabstandete, durch Rasthaken 19, 20 gebildete Verrastungen abgestützt.

Die Erfindung betrifft auch einen Einsatzkörper 5 als solchen, der dübelartig als Hülsenkörper, insbesondere als hülsenförmiger Kunststoffclip, ausgebildet und ein Verbindungselement zwischen einem dornartigen Element, so beispielsweise einem Lagerdorn 6, auf den der Hülsenkörper aufsteckbar ist, und einem eine Einstecköffnung 4 für den Hülsenkörper aufweisenden Element, insbesondere einen Hohlkörper bildet, wobei die Einstecktiefe des Einsatzkörpers 5 durch einen Anschlagbund 15 begrenzt ist und zur Verrastung gegen das dornartige und das die Einstecköffnung enthaltende Element axial zueinander beabstandete Verrastungen, insbesondere Rasthaken 19, 20 vorgesehen sind, von denen der eine benachbart zum Anschlagbund liegt und gegen diesen , radial nach außen angestellt, gerichtet ist (Fig. 4) und der andere, radial nach innen angestellt, sich in Gegenrichtung gegen das dornartige Element, also insbesondere den Lagerdorn 6, abstützt.

Im Rahmen der Erfindung liegt es selbstverständlich auch, Verdeckspriegel über ein erfindungsgemäßes Stützlager mit zugehörigen Gestängelenkern zu verbinden, die nicht als Hohlprofile ausgebildet sind und lediglich mit entsprechend gestalteten Einstecköffnungen versehen sind. Bezogen auf den Montageablauf bildet die erfindungsgemäße Lösung sowohl die Möglichkeit, die Einsatzkörper 5 jeweils zunächst mit dem zugehörigen Verdeckspriegel zu verbinden und anschließend auf den Lagerdorn aufzuschieben, oder auch umgekehrt vorzugehen, wobei die letztgenannte Möglichkeit zur Voraussetzung hat, dass die Rasthaken 19 im gegenüber dem Lagerdorn 6 verrasteten Zustand über den Hülsenumfang nicht vorspringen.

## Patentansprüche

1. Gestängeverbindung für Verdeckgestänge von Kraftfahrzeugverdecken mit den Längsseiten des Verdeckes zugeordneten Traggestängen und mit gegen diese über Stützlager (3) festgelegten, in Fahrzeugquerrichtung verlaufenden Verdeckspriegeln (1), die, als Teil der Stützlager (3), jeweils eine Einstecköffnung (4) für einen gestängeseitigen Lagerdorn (6) aufweisen und gegen den die Einstecköffnung (4) durchsetzenden Lagerdorn (6) verrastend axial abgestützt sind,
**dadurch gekennzeichnet,**
**dass** das Verdeckgestänge als Faltgestänge für PKW-Faltverdecke ausgebildet ist und dass die Stützlager (3) jeweils einen in die Einstecköffnung (4) eingesteckten und den am Gestängelenker (2) ausgebildeten Lagerdorn (6) aufnehmenden Einsatzkörper (5) aufweisen, der einen die Einstecktiefe in die Einstecköffnung (4) begrenzenden Anschlagbund (15) aufweist und in Gegenrichtung zum Anschlagbund (15) gegen den Lagerdorn (6) und den Verdeckspriegel (1) über axial zueinander beabstandete Verrastungen abgestützt ist.

2. Gestängeverbindung nach Anspruch 1,
**dadurch gekennzeichnet,**
**dass** das Verdeckgestänge durch Flachprofile gebildete Gestängelenker (2) mit zum jeweiligen Lagerdorn (6) einstückiger Ausbildung aufweist.

3. Gestängeverbindung nach Anspruch 2,
**dadurch gekennzeichnet,**
**dass** der Lagerdorn (6) randseitig zum jeweiligen Gestängelenker (2) auskragend vorgesehen ist.

4. Gestängeverbindung nach Anspruch 1,
**dadurch gekennzeichnet,**
**dass** der Einsatzkörper (5) als hülsenförmiger Kunststoffklipp ausgebildet ist.

5. Gestängeverbindung nach Anspruch 1,
**dadurch gekennzeichnet,**
**dass** die axial zueinander beabstandeten Verrastungen benachbart zum Anschlagbund (15) einerseits und zum gegenüberliegenden Ende des Einsatzkörpers (5) andererseits vorgesehen sind.

6. Gestängeverbindung nach Anspruch 5,
**dadurch gekennzeichnet,**
**dass** die Verrastungen durch dem hülsenförmigen Einsatzkörper (5) umfangsseitig zugeordnete Rasthaken (19, 20) gebildet sind.

7. Gestängeverbindung nach Anspruch 6,
**dadurch gekennzeichnet,**
**dass** die gegen den Lagerdorn (6) und die gegen den Verdeckspriegel (1) angestellten Rasthaken (19, 20) nach entgegengesetzten Richtungen radial angestellt und nachgiebig sind.

8. Gestängeverbindung nach einem der vorhergehenden Ansprüche,
**dadurch gekennzeichnet,**
**dass** der Verdeckspriegel (1) ein Hohlprofil aufweist.

9. Gestängeverbindung nach Anspruch 8,
**dadurch gekennzeichnet,**
**dass** der Verdeckspriegel (19 ein geschlossenes hohlzylindrisches Profil aufweist.

10. Gestängeverbindung nach Anspruch 8 oder 9,
**dadurch gekennzeichnet,**
**dass** die spriegelseitige Einstecköffnung (4) durch eine das Hohlprofil durchsetzende Bohrung gebildet ist.

## Claims

1. Structure connection for top cover structures of motor vehicle top covers having support structures assigned to the longitudinal sides of the top cover and top cover bow frames (1) which, running in the transverse direction of the vehicle, are fixed to said structures by way of support bearings (3) and which, as part of the support bearings (3) each have an insertion opening (4) for a structure-side bearing tongue (6) and are axially supported, locating against the bearing tongue (6) passing through the insertion opening (4), **characterized in that** the top cover structure is designed as folding structure for passenger car folding top covers and that the support bearings (3) each have an insertion member (5), which is inserted into the insertion opening (4) and receives the bearing tongue (6) formed on the structure linkage (2), and which has a stop collar (15) defining the insertion depth into the insertion opening (4) and in the opposite direction to the stop collar (15) is supported against the bearing tongue (6) and the top cover bow frame (1) by way of axially spaced locating devices.

2. Structure connection according to Claim 1, **characterized in that** the top cover structure has structure linkages (2) formed by flat profiles integrally formed with the respective bearing tongue (6).

3. Structure connection according to Claim 2, **characterized in that** the bearing tongue (6) is designed to project edgewise in relation to the respective structure linkage (2).

4. Structure connection according to Claim 1, **characterized in that** the insertion member (5) is designed as a sleeve-shaped plastic clip.

5. Structure connection according to Claim 1, **characterized in that** the axially spaced locating devices are provided adjacent to the stop collar (15) on the one hand and to the opposite end of the insertion member (5) on the other.

6. Structure connection according to Claim 5, **characterized in that** the locating devices are formed by catch hooks (19, 20) circumferentially assigned to the sleeve-shaped insertion member (5).

7. Structure connection according to Claim 6, **characterized in that** the catch hooks (19, 20) set against the bearing tongue (6) and the top cover bow frame (1) are set radially in opposite directions and are pliable.

8. Structure connection according to any one of the preceding Claims, **characterized in that** the top cover bow frame (1) has a hollow profile.

9. Structure connection according to Claim 8, **characterized in that** the top cover bow frame (19) has a closed, hollow cylindrical profile.

10. Structure connection according to Claim 8 or 9, **characterized in that** the insertion opening (4) on the bow frame side is formed by a hole passing through the hollow profile.

## Revendications

1. Assemblage de tiges pour tiges de capotes de véhicules automobiles avec des tiges porteuses associées aux côtés longitudinaux de la capote et des arceaux de capote (1) fixés contre celles-ci par le biais de paliers de support (3) et s'étendant dans la direction transversale du véhicule, qui, en tant que partie des paliers de support (3), présentent à chaque fois une ouverture d'enfichage (4) pour un mandrin de palier (6) du côté de la tige, et sont supportés axialement par enclenchement contre le mandrin de palier (6) traversant l'ouverture d'enfichage (4),
**caractérisé en ce que**
les tiges de capote sont réalisées sous la forme de tiges repliables pour capotes de véhicules de tourisme et **en ce que** les paliers de support (3) présentent à chaque fois un corps d'insertion (5) enfiché dans l'ouverture d'enfichage (4) et recevant le mandrin de palier (6) réalisé sur le bras de tige (2), lequel présente un épaulement de butée (15) limitant la profondeur d'insertion dans l'ouverture d'enfichage (4), et est supporté dans la direction opposée à l'épaulement (15) contre le mandrin de support (6) et l'arceau de capote (1) par le biais d'encliquetages espacés axialement les uns par rapport aux autres.

2. Assemblage de tiges selon la revendication 1,
**caractérisé en ce que**
les tiges de capote présentent des bras de tige (2) formés par des profilés plats, de réalisation d'une seule pièce avec le mandrin de palier respectif (6).

3. Assemblage de tiges selon la revendication 2,
**caractérisé en ce que**
le mandrin de palier (6) est prévu en saillie du côté du bord par rapport au bras de tige respectif (2).

4. Assemblage de tiges selon la revendication 1,
**caractérisé en ce que**
le corps d'insertion (5) est réalisé sous forme d'agrafe en plastique en forme de douille.

5. Assemblage de tiges selon la revendication 1,
**caractérisé en ce que**
les encliquetages espacés axialement les uns par rapport aux autres sont prévus à proximité de l'épaulement de butée (15) d'une part et vers l'extrémité opposée du corps d'insertion (5) d'autre part.

6. Assemblage de tiges selon la revendication 5,
**caractérisé en ce que**
les encliquetages sont formés par des crochets d'encliquetage (19, 20) associés du côté périphérique au corps d'insertion (5) en forme de douille.

7. Assemblage de tiges selon la revendication 6,
**caractérisé en ce que**
les crochets d'encliquetage (19, 20) placés contre le mandrin de palier (6) et ceux placés contre l'arceau de capote (1) sont placés radialement dans des directions opposées et sont flexibles.

8. Assemblage de tiges selon l'une quelconque des revendications précédentes,
**caractérisé en ce que**
l'arceau de capote (1) présente un profilé creux.

9. Assemblage de tiges selon la revendication 8,
**caractérisé en ce que**
l'arceau de capote (19) présente un profilé fermé cylindrique creux.

10. Assemblage de tiges selon la revendication 8 ou 9,
**caractérisé en ce que**
l'ouverture d'enfichage (4) du côté de l'arceau est formée par un alésage traversant le profilé creux.
